# EUROPEAN PATENT SPECIFICATION

(11) **EP 3 263 336 B1**
(45) Date of publication and mention of the grant of the patent: **16.02.2022**
(21) Application number: 16755512.7
(22) Date of filing: 24.02.2016
(51) Int. Cl.: B32B 27/40, B32B 9/00, B32B 27/36, C08J 7/04, C08G 18/72, C08G 18/76, C09D 175/04, C09D 175/12, C08G 18/32, C08G 18/34, C08G 18/38

(54) **LAMINATED FILM**
VERBUNDFOLIE
FILM STRATIFIÉ

(30) Priority: 24.02.2015 JP 2015033746
(43) Date of publication of application: 03.01.2018
(73) Proprietor: Toyobo Co., Ltd., Osaka-shi Osaka 530-8230 (JP); Mitsui Chemicals, Inc., Tokyo 105-7117 (JP)
(72) Inventor: YAMAZAKI, Atsushi, Inuyama-shi Aichi 484-8508 (JP); KOBAYASHI, Masanori, Inuyama-shi Aichi 484-8508 (JP); KODA, Chikako, Sodegaura-shi Chiba 299-0265 (JP); UCHIDA, Takashi, Sodegaura-shi Chiba 299-0265 (JP)
(74) Representative: Vossius & Partner Patentanwälte Rechtsanwälte mbB
(86) International application number: PCT/JP2016/055324
(87) International publication number: WO 2016/136768

(56) References cited:
- EP-A1- 2 537 673
- EP-A1- 2 647 500
- WO-A1-2008/059925
- WO-A1-2015/016069
- JP-A- 2012 206 327
- JP-A- 2013 151 666
- JP-A- 2013 163 296
- JP-A- 2014 030 984
- JP-A- 2014 069 389

## Description

### TECHNICAL FIELD

The present invention relates to a laminate film used in the packaging field of foodstuffs, pharmaceutical products, industrial products and the like.

More particularly, the present invention relates to a laminate film that includes a coating layer, a metal oxide layer, and a protective layer, wherein the interlayer adhesion of the metal oxide layer can be improved, and excellent gas barrier properties and adhesiveness (lamination strength) can be exhibited even when the laminate film is subjected to a sterilization treatment such as a retort treatment.

### BACKGROUND ART

Packaging materials used for foodstuffs, pharmaceutical products, and the like are required to have characteristics of blocking gases such as oxygen and water vapor, namely, gas barrier properties, in order to suppress oxidation of proteins, oils and fats, keep taste and freshness, and maintain efficacy of pharmaceutical products. In addition, gas barrier materials used for electronic devices, electronic parts, or the like including solar cells and organic EL devices are required to have higher gas barrier properties than gas barrier properties of packaging materials for foodstuffs and the like.

Conventionally, in the food applications requiring blocking of various gases such as water vapor and oxygen, a gas barrier laminate in which a metal thin film made of aluminum or the like, and an inorganic thin film made of an inorganic oxide such as silicon oxide or aluminum oxide are formed on the surface of a substrate film made of plastic is generally used. In particular, a gas barrier laminate in which a thin film of an inorganic oxide such as silicon oxide, aluminum oxide, or a mixture thereof (i.e., a metal oxide layer) is formed is widely used because such a gas barrier laminate is transparent and the contents packaged therein can be ascertained.

However, since the above-mentioned gas barrier laminate tends to locally undergo high temperatures in a formation process, damage to the substrate may occur, or decomposition, degassing or the like may occur in a portion having a low molecular weight or a portion of an additive such as a plasticizer, which may cause the generation of defects, pinholes and the like thereby deteriorating the gas barrier properties. In addition, there is a problem that the metal oxide layer may crack in the post processes including printing, laminating and bag making of packaging materials, resulting in the occurrence of cracks and the deterioration of gas barrier properties. In particular, in the printing process, it is known that the gas barrier properties deteriorate due to the effect of a colorant (pigment) in an ink composition, and the damage to the metal oxide layer further increases. When the metal oxide layer is damaged, there occur problems that in applications to packaging materials for foods or the like which are subjected to a retort treatment, the retort treatment greatly degrades the gas barrier properties and the interlayer adhesion between the inorganic thin film and the resin in contact therewith, resulting in the leakage of the contents.

As a method for remedying such drawbacks of the gas barrier laminate in which the inorganic thin film is formed, an attempt has been made to provide another layer having gas barrier properties on the inorganic thin film. For example, a method of laminating a meta-xylylene group-containing polyurethane on the inorganic thin film is disclosed (see, for example, Patent Document 1). By this method, the drawbacks of the metal oxide layer can be significantly remedied and the gas barrier properties can be greatly improved.

However, if a severe wet-heat treatment such as a boiling treatment or a retort treatment is conducted, barrier properties and lamination strength are deteriorated. As an example of imparting resistance to a boiling treatment or a retort treatment to a laminate, a method is proposed in which an inorganic thin film is coated with a water-soluble polymer, a layered inorganic compound, and a metal alkoxide or a hydrolysate thereof to form a composite of an inorganic material containing the layered inorganic compound and the water-soluble polymer on the inorganic thin film by the sol-gel process. According to this method, excellent characteristics are exhibited even after retort treatment, but there are problems that since the stability of a liquid to be used in coating is low, the characteristics at the start and end of coating (for example, in the case where a roll film to be industrially distributed is produced, the characteristics of an outer circumference portion and an inner circumference portion of the roll) are different, the characteristics vary depending on a slight difference in temperature of drying or a heat treatment in the width direction of the film, and the quality greatly varies depending on an environment at the time of manufacture. Furthermore, since the film coated by the sol-gel process has poor flexibility, a problem is also pointed out that when the film is bent or impacted, pinholes and cracks are liable to occur and the gas barrier properties may be deteriorated.

Under such circumstances, improvements have been desired to allow a resin layer to be formed on the metal oxide layer by a coating method without a sol-gel reaction or the like, that is, a coating method using a resin as a main component and to an extent of being accompanied with a cross-linking reaction at the time of coating. As a gas barrier laminate thus improved, a gas barrier laminate obtained by coating an inorganic thin film with a resin layer containing a layered inorganic compound having a specific particle size and aspect ratio, and a gas barrier laminate obtained by coating an inorganic thin film with a barrier resin containing a silane-coupling agent are disclosed.

On the other hand, as another method for lessening deterioration of the gas barrier laminate in which the inorganic thin film is formed, a method is proposed in which a coating layer composed of various aqueous polyurethane resins, polyester resins, or a mixture of polyurethane and polyester is provided between a polyester substrate film and, for example, a metal oxide layer formed by vapor deposition (see, for example, Patent Document 2). However, in those coating layers, there is a problem of insufficient gas barrier properties.

Patent Document 3 relates to the problem of providing a laminate used in the field of foodstuffs, pharmaceutical products which exhibits excellent barrier properties and adhesiveness when the film is subjected to a sterilisation treatments such as retort treatment, and which includes a substrate, a coating layer, a metal oxide layer and a protective layer. The laminate comprises a base film, which is preferably a polyester, a coating layer which contains an oxazoline group resin and a polyurethane resin which has carboxyl groups, an inorganic thin film which consists of silicon oxide and aluminium oxide and a protective layer containing a polyurethane resin and a block isocyanate.

Patent Document 4 discloses a laminate having gas barrier properties used for food and medical products, which require boil sterilisation, retort sterilisation and are suitable to be used for printing film. The laminate comprises a polyurethane layer over a thin layer of silica, alumina or mixture of silica and alumina vacuum deposited on a substrate. The polyurethane is produced by reacting an isocyanate group-terminated prepolymer made from xylylene diisocyanate, a polyol component containing diol having 2 to 6 carbon atoms and chain-extended with an alkoxysilyl compound having an amino group.

Patent Document 5 discloses a gas barrier laminated film comprising a thermoplastic polymer film, an inorganic thin film which is formed on at least one side of the thermoplastic polymer film, and a resin layer which is obtained by applying an aqueous dispersion containing an ethylene-unsaturated carboxylic acid copolymer (b) inorganic particles (c) and a cross-linking agent (d) to a surface of the inorganic thin film, wherein the inorganic particles (c) are silica particles.

Patent Document 6 discloses a multilayer film comprising a base material, a coating layer and inorganic thin film layer and a protection layer formed from a resin composition comprising a polymer (a) of either a (meth)acrylic acid homopolymer or a (meth)acrylic acid/(meth)acrylic acid ester copolymer containing not less than 10% by mass of (meth)acrylic acid; a polyurethane-urea resin (b) having an ether bond; and at least one crosslinking agent (c) selected from epoxy resins, polyisocyanates, and silane coupling agents.

### RELATED ART DOCUMENTS

### PATENT DOCUMENTS

[Patent Document 1] Japanese Patent No. 4524463
[Patent Document 2] JP-A-Hei-02-50837
[Patent Document 3] JP 2014 030984 A
[Patent Document 4] WO 2015/016069 A1
[Patent Document 5] EP 2 537 673 A1
[Patent Document 6] EP 2 647 500 A1

### SUMMARY OF THE INVENTION

### PROBLEMS TO BE SOLVED BY THE INVENTION

In any of the above-mentioned methods, both gas barrier properties to oxygen, water vapor, and the like and retort resistance cannot be satisfied, and it has not been possible under the current circumstances to retain gas barrier properties when subjected to printing processing.

### MEANS FOR SOLVING THE PROBLEMS

The inventors made intensive studies to solve the above-mentioned problems, and found that in a laminate film in which at least a coating layer is provided on both surfaces or one surface of a substrate film, if the coating layer is composed of a mixed composition of a cross-linking agent and a polyurethane resin (B) having a functional group that can react with the cross-linking agent, a laminate film obtained by forming a metal oxide layer on the coating layer exhibits excellent gas barrier properties and excellent adhesiveness which may not cause interlayer peeling in normal state as well as even after retort treatment is applied. Furthermore, the inventors found that by providing a protective layer containing a polyurethane resin (D) on the metal oxide layer, it is possible to further improve the gas barrier properties and to suppress the deterioration of the gas barrier properties when subjected to printing processing. The present invention was accomplished based on the above findings.

The gas barrier film of the present invention has the following aspects.

(1) A laminate film comprising a coating layer, a metal oxide layer and a protective layer, with another intervening layer or without any intervening layer, laminated in this order on at least one surface of a polyester substrate film, wherein the coating layer comprises an oxazoline group-containing resin (A) and a polyurethane resin (B),
   wherein the content of the oxazoline group in the oxazoline group-containing resin (A) is 5.1 to 9.0 mmol/g,
   wherein the acid value of the polyurethane resin (B) is 25 to 50 mg KOH/g,
   wherein the polyurethane resin (B) is obtained by reacting an isocyanate group-terminated prepolymer with a chain extender,
   wherein the chain extender includes 4,4'-diphenylmethanediamine, tolylenediamine, 1,3- or 1,4-xylylenediamine or a mixture thereof, 3-aminomethyl-3,5,5-trimethylcyclohexylamine , 4,4'-dicyclohexylmethanediamine, 1,3- and 1,4-bis(aminomethyl)cyclohexane, ethylenediamine, 1,6-hexamethylenediamine, hydrazine, hydrazine hydrate, or 2-((2-aminoethyl)amino)ethanol, and
   wherein the isocyanate group-terminated prepolymer is obtained by reacting a polyisocyanate component with a polyol component containing a diol having 2 to 6 carbon atoms, and a carboxyl group-containing polyol,
   wherein the metal oxide layer comprises a composite oxide composed of silicon oxide and aluminum oxide, and
   wherein the protective layer comprises a polyurethane resin (D), the polyurethane resin (D) contains a meta-xylylene group in an amount of 20 to 33% by mass and a silanol group in an amount of 700 to 1700 mg per kg of a resin constituting the polyurethane resin (D) as a Si element amount contained in the silanol group,
   wherein the polyurethane resin (D) is obtained by reacting an isocyanate group-terminated prepolymer with a chain extender containing an alkoxysilyl compound having an amino group,
   wherein the isocyanate group-terminated prepolymer is obtained by reacting a polyisocyanate component with a polyol component containing a diol having 2 to 6 carbon atoms, and a carboxyl group-containing polyol.

The laminate film according to the above (1), wherein the coating layer comprises a resin (C) having an acid value of 30 mg KOH/g or more.

The laminate film according to the above (1) or (2), wherein the coating layer comprises an acrylic resin (E) having an acid value of 10 mg KOH/g or less.

The laminate film according to any of the above (1) to (3), wherein in the coating layer, the polyurethane resin (B) is contained in an amount of 15 to 60% by mass, and the oxazoline group-containing resin (A) is contained in an amount of 30 to 60% by mass.

### EFFECT OF THE INVENTION

According to the present invention, in normal state as well as even after a severe retort treatment is applied, a laminate film that can exhibit excellent gas barrier properties (barrier properties against oxygen and water vapor) and that can develop high lamination strength (adhesiveness) which may not cause interlayer peeling can be provided.

In addition, even when the laminate film of the present invention is subjected to printing processing, the metal oxide layer is not damaged, and hence gas barrier properties and print quality such as design quality can be attained at the same time. Furthermore, since the laminate film of the present invention can be produced easily, it is excellent in economic efficiency, and in addition, excellent in production stability, whereby homogeneous characteristics are obtained easily.

As a result, the laminate film of the present invention is also useful as a food packaging film which undergoes a boiling and retort treatment process requiring gas barrier properties and printability.

### MODE FOR CARRYING OUT THE INVENTION

A laminate film of the present invention includes a coating layer, a metal oxide layer and a protective layer, with another intervening layer or without any intervening layer, laminated in this order on at least one surface of a polyester substrate film. The substrate film and the layers laminated thereon will be explained later in due order.

### [Substrate film]

The polyester substrate film used in the present invention is a plastic substrate film. For example, a film obtained by melt-extruding a plastic, optionally stretching the plastic in the longitudinal direction and/or the width direction, and then being subjected to cooling and thermal fixation can be used. As the polyester, at least one of polyethylene terephthalate, polybutylene terephthalate, and polyethylene-2,6-naphthalate is preferably used in view of heat resistance, dimensional stability and transparency. Polyethylene terephthalate or a copolymer formed by copolymerization of polyethylene terephthalate and other components is particularly preferable.

As the substrate film, a film having any film thickness depending on the desired purpose or use in view of mechanical strength, transparency and the like can be used. Although the film thickness of the substrate film is not particularly limited, it is usually recommended to be 5 to 100 µm, and it is desirable to be 8 to 60 µm in the case of using for a packaging material. Although the transparency of the substrate film is not particularly limited, a substrate film having a light transmittance of 50% or more is desirable in the case of using as a packaging material that is required to be transparent.

The substrate film may be a monolayered film composed of one kind of plastic or a multilayered film obtained by laminating two or more kinds of plastic films. In the case of the multilayered film, the type and number of layers, a laminating method, and the like are not particularly limited, and may be arbitrarily selected from among known methods in accordance with the purpose.

So far as the object of the present invention can be attained, the substrate film may be subjected to a surface treatment such as a corona discharge treatment, a glow discharge treatment, a flame treatment, or a surface roughening treatment, or subjected to a known anchor coating treatment, printing, decoration, or the like.

### [Coating layer]

In the present invention, the coating layer contains an oxazoline group-containing resin (A) and a polyurethane resin (B). The coating layer is preferably formed by coating with a resin composition for a coating layer containing the oxazoline group-containing resin (A) and the polyurethane resin (B) and then stretching in at least one direction. Consequently, it can be expected that gas barrier properties and adhesiveness of the coating layer are improved due to the cohesive force of the polyurethane resin (B). Furthermore, a carboxylic acid group in the polyurethane resin (B) and an oxazoline group in the oxazoline group-containing resin (A) undergo a cross-linking reaction whereby excellent gas barrier properties and lamination strength can be retained in normal state as well as when a retort treatment is applied. In order to achieve these effects, the coating layer contains the oxazoline group-containing resin (A) preferably in an amount of 30 to 60% by mass, more preferably 35 to 55% by mass, and further preferably 40 to 50% by mass. Furthermore, the coating layer contains the polyurethane resin (B) preferably in an amount of 15 to 60% by mass, more preferably 20 to 55% by mass, further preferably 25 to 50% by mass, and particularly preferably 30 to 50% by mass.

Next, the constituent components of the resin composition for a coating layer, that forms the coating layer, will be described in detail.

### (Oxazoline group-containing resin (A))

The resin composition for a coating layer contains an oxazoline group-containing resin (A). As the oxazoline group-containing resin (A), for example, a polymer having an oxazoline group obtained by copolymerization of a polymerizable unsaturated monomer having an oxazoline group, if need arises, together with other polymerizable unsaturated monomers by a conventionally known method (for example, solution polymerization, emulsion polymerization, or the like) can be given.

Examples of the polymerizable unsaturated monomer having an oxazoline group include 2-vinyl-2-oxazoline, 2-vinyl-4-methyl-2-oxazoline, 2-vinyl-5-methyl-2-oxazoline, 2-isopropenyl-2-oxazoline, 2-isopropenyl-4-methyl-2-oxazoline, 2-isopropenyl-5-ethyl-2-oxazoline, and the like. These may be used singly or in combination of two or more.

Examples of the other polymerizable unsaturated monomers include C1-24 alkyl groups or cycloalkyl esters of (meth)acrylic acids such as methyl (meth)acrylate, ethyl (meth)acrylate, propyl (meth)acrylate, butyl (meth)acrylate, 2-ethylhexyl (meth)acrylate, cyclohexyl (meth)acrylate, lauryl (meth)acrylate, and isobornyl (meth)acrylate; C2-8 hydroxyalkyl esters of (meth)acrylic acid such as 2-hydroxyethyl (meth)acrylate and hydroxypropyl (meth)acrylate; vinyl aromatic compounds such as styrene and vinyltoluene; (meth)acrylamide, dimethylaminopropyl (meth)acrylamide, dimethylaminoethyl (meth)acrylate, and adduct of glycidyl (meth)acrylate to amines; polyethylene glycol (meth)acrylate; N-vinylpyrrolidone, ethylene, butadiene, chloroprene, vinyl propionate, vinyl acetate, and (meth)acrylonitrile, and the like. These may be used singly or in combination of two or more.

The oxazoline group-containing resin (A) used in the present invention is preferably a water-soluble resin from the viewpoint of improving compatibility with other resins, wettability, cross-linking reaction efficiency, transparency of the coating layer, and the like. In order to make the oxazoline group-containing resin (A) into a water-soluble resin, it is preferred to contain a hydrophilic monomer as the above-mentioned other polymerizable unsaturated monomers.

Examples of the hydrophilic monomer include 2-hydroxyethyl (meth)acrylate, monomers having a polyethylene glycol chain such as methoxypolyethylene glycol (meth)acrylate and monoester compounds of (meth)acrylic acid and polyethylene glycol, 2-aminoethyl (meth)acrylate and its salt, (meth)acrylamide, N-methylol (meth)acrylamide, N-(2-hydroxyethyl) (meth)acrylamide, (meth)acrylonitrile, sodium styrenesulfonate, and the like. Among these, monomers having a polyethylene glycol chain such as methoxypolyethylene glycol (meth)acrylate and monoester compounds of (meth)acrylic acid and polyethylene glycol, which exhibit high water solubility, are preferable. The molecular weight of the polyethylene glycol chain to be introduced is preferably 150 to 700, particularly preferably 150 to 200 in view of water resistance, and 300 to 700 in view of compatibility with other resins and transparency of the coating layer.

In the copolymer composed of the polymerizable unsaturated monomer having an oxazoline group and the other polymerizable unsaturated monomers, the compositional molar ratio of the polymerizable unsaturated monomer having an oxazoline group is preferably 30 to 70 mol%, and more preferably 40 to 65 mol%.

According to the present invention, the content of the oxazoline group in the oxazoline group-containing resin (A) is 5.1 to 9.0 mmol/g, and preferably 6.0 to 8.0 mmol/g. Conventionally, regarding the use of the oxazoline group-containing resin (A) in the coating layer, examples of use of resins containing about 5.0 mmol/g of an oxazoline group have been reported, whereas a resin containing a relatively large amount of an oxazoline group is used in the present invention. The use of a resin containing a large amount of an oxazoline group makes it possible to form a cross-linking structure in the coating layer, and at the same time, to retain the oxazoline group in the coating layer, whereby gas barrier properties and adhesiveness during a retort treatment can be maintained.

The number average molecular weight of the oxazoline group-containing resin (A) is preferably in the range of 20000 to 50000, and more preferably 25000 to 45000 in order to develop the flexibility and the cohesive force of the coating layer. If the number average molecular weight is less than 20000, the binding force when forming a cross-linking structure increases, so that the flexibility of the coating layer during a retort treatment cannot be sufficiently attained, and there is concern about the increase of the stress loading applied to the metal oxide layer. On the other hand, if the number average molecular weight exceeds 50000, the cohesive force of the coating layer is not sufficient, so that the water resistance may decrease.

### (Polyurethane resin (B))

According to the present invention, the acid value of the polyurethane resin (B) is 25 to 50 mg KOH/g. If the acid value is below this range, the number of reaction sites with a cross-linking agent decreases, and hence gas barrier properties and lamination strength deteriorate when a retort treatment is applied. If the acid value is higher than this range, it becomes difficult to obtain a stable polyurethane resin (B). The acid value of the resin solid content is more preferably 27 to 45 mg KOH/g, further preferably 30 to 40 mg KOH/g, particularly preferably 32 to 40 mg KOH/g, and most preferably 35 to 40 mg KOH/g.

A dispersion containing the polyurethane resin (B) of the present invention (hereinafter referred to as the polyurethane resin (B)-containing dispersion) can be obtained by dispersing the polyurethane resin (B) (aqueous polyurethane resin) in water. The polyurethane resin (B) is obtained by allowing an isocyanate group-terminated prepolymer to react with a chain extender. The isocyanate group-terminated prepolymer is obtained by allowing a polyisocyanate component to react with a polyol component.

Examples of the polyisocyanate component include tolylene diisocyanate (2,4- or 2,6-tolylene diisocyanate or a mixture thereof) (TDI), phenylene diisocyanate (m-, p-phenylene diisocyanate or a mixture thereof), 1,5-naphthalene diisocyanate (NDI), diphenylmethane diisocyanate (4,4'-, 2,4'- or 2,2'-diphenylmethane diisocyanate or a mixture thereof) (MDI), tetramethylxylylene diisocyanate (1,3- or 1,4-tetramethylxylylene diisocyanate or a mixture thereof) (TMXDI), 1,6-hexamethylene diisocyanate (also called: hexamethylene diisocyanate) (HDI), xylylene diisocyanate (XDI), hydrogenated xylylene diisocyanate (also called: bis(isocyanatomethyl)cyclohexane) (H6XDI), 3-isocyanatomethyl-3,5,5-trimethylcyclohexyl isocyanate (also called: isophoron diisocyanate) (IPDI), methylenebis(cyclohexyl isocyanate) (also called: bis(isocyanatocyclohexyl)methane) (4,4'-, 2,4'- or 2,2'-methylenebis(cyclohexyl isocyanate), their Trans, Trans-isomer, Trans, Cis-isomer, Cis, Cis-isomer, or a mixture thereof) (H12MDI), and the like.

These polyisocyanates may be used singly or in combination of two or more. From the viewpoint of improving gas barrier properties, araliphatic polyisocyanates and alicyclic polyisocyanates are preferably used, and alicyclic polyisocyanates are more preferably used. The polyisocyanates containing xylylene diisocyanate are preferably used.

Examples of xylylene diisocyanate (XDI) include, as a structural isomer thereof, 1,2-xylylene diisocyanate (o-XDI), 1,3-xylylene diisocyanate (m-XDI), and 1,4-xylylene diisocyanate (p-XDI).

These xylylene diisocyanates may be used singly or in combination of two or more. For the xylylene diisocyanate, 1,3-xylylene diisocyanate and 1,4-xylylene diisocyanate are preferably used, and 1,3-xylylene diisocyanate is more preferably used.

By containing a xylylene group, particularly 1,3-xylylene group (meta-xylylene group), high gas barrier properties can be developed. The content of the meta-xylylene group in the polyurethane resin (B) is preferably 25 to 33% by mass. By adjusting the content of the meta-xylylene group within the above range, the balance between gas barrier properties and stability of the polyurethane resin (B) can be properly kept. The content of the meta-xylylene group is more preferably 27 to 32% by mass, further preferably 29 to 32% by mass, and particularly preferably 31 to 32% by mass.

The polyol component contains, as essential components, a diol having 2 to 6 carbon atoms, and a carboxyl group-containing polyol.

The diol having 2 to 6 carbon atoms is an organic compound having two hydroxyl groups and having 2 to 6 carbon atoms, and to be specific, examples thereof include alkanediol having 2 to 6 carbon atoms (alkyleneglycol having 2 to 6 carbon atoms) such as ethylene glycol, propylene glycol, 1,3-propanediol, 1,4-butyleneglycol, 1,3-butyleneglycol, 1,2-butyleneglycol, 1,5-pentanediol, 1,6-hexanediol, neopentyl glycol, 3-methyl-1,5-pentanediol, or 1,3- or 1,4-cyclohexanediol; etherdiol having 2 to 6 carbon atoms such as diethylene glycol, triethylene glycol, or dipropylene glycol, and the like.

These diols having 2 to 6 carbon atoms may be used singly or in combination of two or more.

For the diol having 2 to 6 carbon atoms, preferably, alkanediol having 2 to 6 carbon atoms, more preferably, ethylene glycol is used.

Examples of the carboxy group-containing polyol include polyhydroxyalkanoic acids such as 2,2-dimethylolacetic acid, 2,2-dimethylollactic acid, 2,2-dimethylolpropionic acid (also called: dimethylolpropionic acid), 2,2-dimethylolbutanoic acid, 2,2-dimethylolbutyric acid, 2,2-dimethylolvaleric acid, and the like. Preferably, 2,2-dimethylolpropionic acid is used.

The polyol component may contain, in addition, as an optional component, other polyol compounds (excluding the above-mentioned diol having 2 to 6 carbon atoms and carboxyl group-containing polyol).

Examples of the other polyol compounds include low-molecular-weight polyols having a functionality of three or more such as trimethylolpropane or glycerin, polyether polyols, polyester polyols, polycarbonate polyols, polycaprolactone polyols, polyolefin polyols, acryl polyols, and the like.

These polyol compounds (excluding the above-mentioned diol having 2 to 6 carbon atoms and carboxyl group-containing polyol) may be used singly or in combination of two or more.

As described above, the polyhydroxyalkanoic acid is blended such that the acid value of the resin solid content becomes 25 to 50 mg KOH/g.

To synthesize the isocyanate group-terminated prepolymer, the above-described components are blended at a rate such that the equivalent ratio (isocyanate group/active hydrogen group) of the isocyanate group relative to the active hydrogen group (hydroxyl group and amino group) is more than 1, preferably 1.1 to 10. Then, the above-described components are allowed to react by a known polymerization method such as bulk polymerization and solution polymerization, preferably by solution polymerization with which reactivity and viscosity can be easily adjusted.

In the bulk polymerization, for example, the above-described components are blended under a nitrogen atmosphere, and allowed to react at a reaction temperature of 75 to 85°C for about 1 to 20 hours.

In the solution polymerization, for example, the above-described components are blended in an organic solvent (solvent) under a nitrogen atmosphere, and allowed to react at a reaction temperature of 20 to 80°C for about 1 to 20 hours.

Examples of the organic solvent include those which are inactive to isocyanate groups and are highly hydrophilic, for example, acetone, methyl ethyl ketone, ethyl acetate, tetrahydrofuran, acetonitrile, and the like.

In the above-described polymerization, as necessary, for example, amine-based, tin-based, or lead-based reaction catalysts can be added.

When, for example, an anionic group is contained, it is preferred that a neutralizing agent be added to neutralize to form a salt of the anionic group.

Examples of the neutralizing agent include a commonly used base, for example, organic bases (e.g., tertiary amines (trialkylamine having 1 to 4 carbon atoms such as trimethylamine or triethylamine, and alkanolamines such as dimethylethanolamine, methyldiethanolamine, triethanolamine, and triisopropanolamine)), inorganic bases (ammonia, alkali metal hydroxide (lithium hydroxide, sodium hydroxide, potassium hydroxide, etc.), alkaline earth metal hydroxides (magnesium hydroxide, calcium hydroxide, etc.), and alkali metal carbonates (sodium carbonate, potassium carbonate, etc.)). These bases can be used singly or in combination of two or more.

The neutralizing agent is added at a rate of, per 1 equivalent of anionic group, 0.4 equivalent or more, preferably 0.6 equivalent or more, and for example, 1.2 equivalent or less, and preferably 1 equivalent or less.

The thus produced isocyanate group-terminated prepolymer is a polyurethane prepolymer having two or more free isocyanate groups at its molecular terminal, and the isocyanate group content (the isocyanate group content in terms of the solid content excluding the solvent) is, for example, 1.0% by mass or more and 10% by mass or less.

Next, in this method, the isocyanate group-terminated prepolymer produced as described above is allowed to react with a chain extender, for example, in water, thereby producing a polyurethane resin (B)-containing dispersion. According to the present invention, the chain extender includes 4,4'-diphenylmethanediamine, tolylenediamine, 1,3- or 1,4-xylylenediamine, or mixtures thereof, 3-aminomethyl-3,5,5-trimethylcyclohexylamine (also called: isophoronediamine), 4,4'-dicyclohexylmethanediamine, 1,3- and 1,4-bis(aminomethyl)cyclohexane, ethylenediamine, 1,6-hexamethylenediamine, hydrazine , hydrazine hydrate and 2-((2-aminoethyl)amino)ethanol (also called: N-(2-aminoethyl)ethanolamine).

These polyamines may be used singly or in combination of two or more. For the polyamine, preferably, amino alcohol is used.

To allow the isocyanate group-terminated prepolymer to react with the chain extender in water, for example, first, the isocyanate group-terminated prepolymer is added to water to disperse the isocyanate group-terminated prepolymer in water, and then the chain extender is added thereto, thereby extending the chains of the isocyanate group-terminated prepolymer with the chain extender.

To disperse the isocyanate group-terminated prepolymer in water, the isocyanate group-terminated prepolymer is added to water under stirring at a ratio of 100 to 1000 parts by mass of water relative to 100 parts by mass of the isocyanate group-terminated prepolymer.

Thereafter, the chain extender is added dropwise to the water in which the isocyanate group-terminated prepolymer is dispersed while stirring so that the equivalent ratio (active hydrogen group/isocyanate group) of the active hydrogen group (amino group and hydroxyl group) of the chain extender relative to the isocyanate group of the isocyanate group-terminated prepolymer becomes, for example, 0.6 to 1.2.

The chain extender is allowed to react by adding dropwise, and after the dropwise addition, the reaction is completed while further mixing, for example, at normal temperature. The reaction time until the completion of reaction is, for example, 0.1 hour or more, and for example, 10 hours or less.

The produced polyurethane resin (B)-containing dispersion has a solid content concentration of, for example, 10% by mass or more, preferably 15% by mass or more, more preferably 20% by mass or more, and for example, 60% by mass or less, preferably 50% by mass or less, more preferably 45% by mass or less.

### (Resin (C) having an acid value of 30 mg KOH/g or more)

The above-mentioned coating layer may contain a resin (C) having an acid value of 30 mg KOH/g or more in order to improve cross-linking density of the coating layer. Due to partial cross-linking of the carboxylic acid group and the oxazoline group in the resin, the cohesive force of the coating layer improves whereby the water resistance can be further improved. As the resin composition, for example, a polyester resin, an olefin resin, or the like can be given. Taking adhesiveness to the substrate and flexibility into consideration, a polyester resin is more preferable. The acid value of the resin is preferably 30 to 80 mg KOH/g, more preferably 40 to 75 mg KOH/g, and further preferably 50 to 70 mg KOH/g. If the acid value is less than 30 mg KOH/g, the effect of improving the cohesive force due to cross-linking may not be obtained. On the other hand, if the acid value exceeds 80 mg KOH/g, cross-linking proceeds excessively, and hence the flexibility of the coating layer may decrease, and the stress applied to the metal oxide layer during a retort treatment may increase.

### (Acrylic resin (E))

The above-mentioned coating layer may contain an acrylic resin (E) in order to improve water resistance of the coating layer. As the acrylic resin, an acrylic resin containing an alkyl acrylate and/or an alkyl methacrylate (hereinafter sometimes collectively referred to as "alkyl (meth)acrylate") as a main component is used. As the acrylic resin, to be specific, a water-soluble or water-dispersible resin containing an alkyl (meth)acrylate component usually in an amount of 40 to 95 mol% and a vinyl monomer component that is copolymerizable and has a functional group usually in an amount of 5 to 60 mol% can be given. By allowing the content of the alkyl (meth)acrylate in the acrylic resin to be 40 mol% or more, the coatability, strength and antiblocking property of the coating film are particularly improved. In addition, by allowing the content of the alkyl (meth)acrylate in the acrylic resin to be 95 mol% or less and by introducing 5 mol% or more of a compound having a predetermined functional group in the acrylic resin as a copolymerization component, water solubilization or water dispersion of the resin can be easily attained, and the attained state can be stabilized for a long period of time. As a result, the adhesion between the coating layer and the substrate film can be improved, and the strength, water resistance, chemical resistance or the like of the coating layer can be improved due to the reaction in the coating layer. The content of the alkyl (meth)acrylate is preferably 50 to 90 mol%, and more preferably 60 to 85%.

Examples of an alkyl group in the alkyl (meth)acrylate include methyl group, n-propyl group, isopropyl group, n-butyl group, isobutyl group, 2-ethylhexyl group, lauryl group, stearyl group, cyclohexyl group, and the like.

Examples of a functional group in the vinyl monomer that is copolymerizable and has a functional group include carboxyl group, acid anhydride group, sulfonic acid group or salts thereof, amide group, alkylolated amide group, amino group (including substituted amino group), alkylolated amino group or salts thereof, hydroxyl group, epoxy group, and the like. In particular, carboxyl group, acid anhydride group, and epoxy group are preferred. These functional groups may be used singly or in combination of two or more.

Examples of compounds, which can be used as the vinyl monomer, having a carboxyl group or an acid anhydride include acrylic acid, methacrylic acid, itaconic acid, maleic acid, and their alkali metal salts, alkali earth metal salts, and ammonium salts, and further include maleic anhydride.

Examples of compounds, which can be used as the vinyl monomer, having a sulfonic acid or a salt thereof include vinylsulfonic acid, styrenesulfonic acid, metal salts (sodium salts, etc.) of these sulfonic acids, ammonium salts of these sulfonic acids, and the like.

Examples of compounds, which can be used as the vinyl monomer, having an amide group or an alkylolated amide group include acrylamide, methacrylamide, N-methylmethacrylamide, methylolated acrylamide, methylolated methacrylamide, ureido vinyl ether, β-ureidoisobutyl vinyl ether, ureidoethyl acrylate, and the like.

Examples of compounds, which can be used as the vinyl monomer, having an amino group, an alkylolated amino group or a salt thereof include diethylaminoethyl vinyl ether, 2-aminoethyl vinyl ether, 3-aminopropyl vinyl ether, 2-aminobutyl vinyl ether, dimethylaminoethyl methacrylate, dimethylaminoethyl vinyl ether, those obtained by methylolating these amino groups, or those quaternized with an alkyl halide, dimethyl sulfate, sultone, and the like.

Examples of compounds, which can be used as the vinyl monomer, having a hydroxyl group include β-hydroxyethyl acrylate, β-hydroxyethyl methacrylate, β-hydroxypropyl acrylate, β-hydroxypropyl methacrylate, β-hydroxy vinyl ether, 5-hydroxypentyl vinyl ether, 6-hydroxyhexyl vinyl ether, polyethylene glycol monoacrylate, polyethylene glycol monomethacrylate, polypropylene glycol monoacrylate, polypropylene glycol monomethacrylate, and the like.

Examples of compounds, which can be used as the vinyl monomer, having an epoxy group include glycidyl acrylate, glycidyl methacrylate, and the like.

In the aqueous acrylic resin, in addition to the alkyl (meth)acrylate and the compound having the above-mentioned functional group as the vinyl monomer, for example, acrylonitrile, styrenes, butyl vinyl ether, maleic acid mono- or di-alkylester, fumaric acid mono- or di-alkylester, itaconic acid mono- or di-alkylester, methyl vinyl ketone, vinyl chloride, vinylidene chloride, vinyl acetate, vinyl pyridine, vinyl pyrrolidone, vinyl trimethoxysilane, or the like may be used in combination.

The acid value of the acrylic resin is preferably 10 mg KOH/g or less, more preferably 8 mg KOH/g or less, and further preferably 5 mg KOH/g or less. If the acid value is 10 mg KOH/g or less, the resin itself is excellent in water resistance, and the cohesive force of the coating layer can be therefore improved without cross-linking. If the acid value exceeds 10 mg KOH/g, the strength of the coating layer is improved by cross-linking, but the flexibility of the coating layer may be lowered, leading to increase of stress applied to the metal oxide layer during a retort treatment.

When the coating layer contains the above-mentioned other resins, the content of the other resins in 100% by mass of all resin components is preferably 5 to 40% by mass, more preferably 10 to 35% by mass, further preferably 15 to 30% by mass, particularly preferably 15 to 25% by mass, and most preferably 15 to 20% by mass.

The resin composition for a coating layer may contain, as necessary, various known inorganic or organic additives such as antistatic agents, lubricants, and anti-blocking agents within a range which does not impair the invention.

Although the coating amount of the resin composition for a coating layer is not particularly limited, it is preferably in the range of 0.015 to 0.500 g/m² in a dry state, and from the viewpoint of practicality, more preferably in the range of 0.020 to 0.300 g/m², further preferably in the range of 0.025 to 0.300 g/m², and particularly preferably in the range of 0.050 to 0.300 g/m². If it is less than 0.015 g/m², it may become difficult to attain sufficient adhesiveness, gas barrier properties, and coating formation, and if it is more than 0.500 g/m², it tends to be disadvantageous in terms of cost.

As a preferred method for forming a coating layer, an in-line coating method can be given. For example, in an in-line coating method performed in a step of producing a substrate film, the conditions of drying and a heat treatment at the time of coating vary depending on a coating thickness and the conditions of an apparatus. However, it is preferred that the substrate film be fed into a stretching step in the perpendicular direction immediately after coating and dried in a preheating zone or a stretching zone in the stretching step, and in such a case, it is usually desirable to set the temperature to about 50 to 250°C.

### [Metal oxide layer]

In the laminate film of the present invention, a metal oxide layer is disposed above the coating layer. From the viewpoint of the achievement of both flexibility and density of a thin film layer, the metal oxide layer is a thin film made of a composite oxide composed of silicon oxide and aluminum oxide. In the composite oxide, it is preferred that silicon oxide and aluminum oxide be mixed at such a mixing ratio that the concentration of Al is 20 to 70% in terms of metal content by mass. If the concentration of Al is less than 20%, the barrier properties might be decreased. On the other hand, if the concentration of Al is more than 70%, the metal oxide layer tends to be harder and the film may be broken during secondary fabrication such as printing and lamination to cause deterioration in barrier properties. The term "silicon oxide" as used herein refers to any one of various silicon oxides such as SiO and SiO₂ or a mixture thereof, and the term "aluminum oxide" refers to any one of various aluminum oxides such as AlO and Al₂O₃ or a mixture thereof.

The thickness of the metal oxide layer is normally 1 to 100 nm, and preferably 5 to 50 nm. If the thickness of the metal oxide layer is less than 1 nm, acceptable gas barrier properties might not be achieved. On the other hand, if the thickness is increased to more than 100 nm, the gas barrier properties-improving effect consistent with such increase in the thickness cannot be obtained and it would become disadvantageous from the viewpoint of bending resistance and production cost.

The method for forming the metal oxide layer is not particularly limited, and a known vapor deposition method such as a physical vapor deposition method (PVD method) such as a vacuum vapor deposition method, a sputtering method or an ion plating method, or a chemical vapor deposition method (CVD method) may be employed appropriately. Hereinbelow, a typical method for forming the metal oxide layer is described with taking a silicon oxide-aluminum oxide-based thin film as an example. For example, in the case where a vacuum vapor deposition method is employed, a mixture of SiO₂ and Al₂O₃, a mixture of SiO₂ and Al, or the like is preferably used as a vapor deposition raw material. As the vapor deposition raw material, particles are generally used. In this case, it is desirable that each of the particles has such a size that the change in pressure during the vapor deposition cannot be caused, and a preferred particle size of the particles is 1 mm to 5 mm. For performing heating, a heating mode such as resistance heating, high-frequency induction heating, electron beam heating, or laser heating can be employed. Furthermore, a reactive deposition method may also be employed in which an oxygen gas, a nitrogen gas, a hydrogen gas, an argon gas, a carbon dioxide gas, a water vapor or the like is introduced as a reaction gas, and this reactive deposition method may be combined with a means such as ozone addition or ion assisting. In addition, the film formation conditions may be varied as appropriate; for example, a bias may be applied to a material to be subjected to deposition (i.e., a laminate film to be subjected to deposition), and a material to be subjected to deposition may be heated or cooled. In the case where a sputtering method or a CVD method is employed, the deposition material, the reaction gas, the bias to be applied to a material to be subjected to deposition, the heating/cooling of a material to be subjected to deposition, and the like can also be varied as mentioned above.

### [Protective layer]

The laminate film of the present invention has a protective layer, above the metal oxide layer, that is formed from a resin composition for a protective layer described in detail below.

The metal oxide layer is not a perfectly dense film, but has minute deficient portions dotted therein. By applying a specific resin composition for a protective layer described later onto the metal oxide layer to form a protective layer, the resin contained in the resin composition for a protective layer penetrates into the deficient portions of the metal oxide layer, and as a result, the gas barrier properties can be stabilized. Furthermore, by covering the metal oxide layer with the protective layer, it is possible not only to protect the metal oxide layer from rubbing and shearing during printing but also to protect the metal oxide layer from a pigment in an ink, thereby to maintain the barrier properties stably. In addition, by using a material having gas barrier properties also for the protective layer itself, the gas barrier performance of the laminate film may be greatly improved.

The protective layer contains a polyurethane resin (D). The content of a meta-xylylene group in the polyurethane resin (D) is 20 to 33% by mass, and the amount of a silanol group is 700 to 1700 mg per kg of a resin constituting the polyurethane resin (D) as a Si element amount contained in the silanol group. When the content of the meta-xylylene group is 20% by mass or more, excellent gas barrier properties can be exhibited, and when the amount of the silanol group is 700 to 1700 mg per kg of a resin constituting the polyurethane resin (D) as a Si element amount contained in the silanol group, the protective layer has water resistance, flexibility, and adhesiveness to a metal oxide layer which is an inorganic thin film, and hence the stress applied to the metal oxide layer during a retort treatment is relaxed, whereby the deterioration of the metal oxide layer can be suppressed. The content of the meta-xylylene group is more preferably 23 to 32% by mass, further preferably 25 to 32% by mass, and particularly preferably 28 to 32% by mass.

Next, the constituent components of the resin composition for a protective layer forming the protective layer will be described in detail.

### (Polyurethane resin (D))

A dispersion containing the polyurethane resin (D) of the present invention (hereinafter referred to as a polyurethane resin (D)-containing dispersion) can be obtained by dispersing a polyurethane resin (aqueous polyurethane resin) in water. The polyurethane resin is obtained by allowing an isocyanate group-terminated prepolymer to react with a chain extender.

The isocyanate group-terminated prepolymer is obtained by allowing a polyisocyanate component to react with a polyol component.

The polyisocyanate component contains, as essential components, xylylene diisocyanate. Examples of xylylene diisocyanate (XDI) include, as a structural isomer thereof, 1,2-xylylene diisocyanate (o-XDI), 1,3-xylylene diisocyanate (m-XDI), and 1,4-xylylene diisocyanate (p-XDI).

These xylylene diisocyanates may be used singly or in combination of two or more. For the xylylene diisocyanate, 1,3-xylylene diisocyanate or 1,4-xylylene diisocyanate is preferably used, and 1,3-xylylene diisocyanate is more preferably used.

By containing a xylylene group, particularly 1,3-xylylene group (meta-xylylene group), high gas barrier properties can be developed. The content of the meta-xylylene group in the polyurethane resin (D) is 20 to 33% by mass as described above, and by adjusting the content of the meta-xylylene group within the above range, the balance between gas barrier properties and stability of the polyurethane resin (D) can be properly kept.

In addition, the polyisocyanate component may contain other polyisocyanates as necessary.

Examples of the other polyisocyanates include tolylene diisocyanate (2,4- or 2,6-tolylene diisocyanate or a mixture thereof) (TDI), phenylene diisocyanate (m-, p-phenylene diisocyanate or a mixture thereof), 1,5-naphthalene diisocyanate (NDI), diphenylmethane diisocyanate (4,4'-, 2,4'- or 2,2'-diphenylmethane diisocyanate or a mixture thereof) (MDI), tetramethylxylylene diisocyanate (1,3- or 1,4-tetramethylxylylene diisocyanate or a mixture thereof) (TMXDI), 1,6-hexamethylene diisocyanate (also called: hexamethylene diisocyanate) (HDI), hydrogenated xylylene diisocyanate (also called: bis(isocyanatomethyl) cyclohexane) (H6XDI), 3-isocyanatomethyl-3,5,5-trimethylcyclohexyl isocyanate (also called: isophoron diisocyanate) (IPDI), methylenebis(cyclohexyl isocyanate) (also called: bis(isocyanatocyclohexyl)methane) (4,4'-, 2,4'- or 2,2'-methylenebis(cyclohexyl isocyanate), their Trans, Trans-isomer, Trans, Cis-isomer, Cis, Cis-isomer, or a mixture thereof) (H12MDI), and the like.

These other polyisocyanates may be used singly or in combination of two or more. Araliphatic polyisocyanates and alicyclic polyisocyanates are preferably used, and alicyclic polyisocyanates are more preferably used.

The polyol component contains, as essential components, a diol having 2 to 6 carbon atoms, and a carboxyl group-containing polyol.

The diol having 2 to 6 carbon atoms is an organic compound having two hydroxyl groups and having 2 to 6 carbon atoms, and to be specific, examples thereof include alkanediol having 2 to 6 carbon atoms (alkyleneglycol having 2 to 6 carbon atoms) such as ethylene glycol, propylene glycol, 1,3-propanediol, 1,4-butyleneglycol, 1,3-butyleneglycol, 1,2-butyleneglycol, 1,5-pentanediol, 1,6-hexanediol, neopentyl glycol, 3-methyl-1,5-pentanediol, or 1,3- or 1,4-cyclohexanediol; etherdiol having 2 to 6 carbon atoms such as diethylene glycol, triethylene glycol, or dipropylene glycol, and the like.

These diols having 2 to 6 carbon atoms may be used singly or in combination of two or more.

For the diol having 2 to 6 carbon atoms, preferably, alkanediol having 2 to 6 carbon atoms, more preferably, ethylene glycol is used.

Examples of the carboxy group-containing polyol include polyhydroxyalkanoic acids such as 2,2-dimethylolacetic acid, 2,2-dimethylollactic acid, 2,2-dimethylolpropionic acid (also called: dimethylolpropionic acid), 2,2-dimethylolbutanoic acid, 2,2-dimethylolbutyric acid, 2,2-dimethylolvaleric acid, and the like. Preferably, 2,2-dimethylolpropionic acid is used.

The polyol component may contain, in addition, as an optional component, other polyol compounds (excluding the above-mentioned diol having 2 to 6 carbon atoms and carboxyl group-containing polyol).

Examples of the other polyol compounds include low-molecular-weight polyols having a functionality of three or more such as trimethylolpropane or glycerin, polyether polyols, polyester polyols, polycarbonate polyols, polycaprolactone polyols, polyolefin polyols, acryl polyols, and the like.

These polyol compounds (excluding the above-mentioned diol having 2 to 6 carbon atoms and carboxyl group-containing polyol) may be used singly or in combination of two or more.

The polyhydroxyalkanoic acid is blended so that the acid value of the resin solid content is preferably 5 to 40 mg KOH/g, more preferably 10 to 30 mg KOH/g, and further preferably 15 to 25 mg KOH/g.

To synthesize the isocyanate group-terminated prepolymer, the above-described components are blended at a rate such that the equivalent ratio (isocyanate group/active hydrogen group) of the isocyanate group relative to the active hydrogen group (hydroxyl group and amino group) is more than 1, preferably 1.1 to 10. Then, the above-described components are allowed to react by a known polymerization method such as bulk polymerization and solution polymerization, preferably by solution polymerization with which reactivity and viscosity can be easily adjusted.

In the bulk polymerization, for example, the above-described components are blended under a nitrogen atmosphere, and allowed to react at a reaction temperature of 75 to 85°C for about 1 to 20 hours.

In the solution polymerization, for example, the above-described components are blended in an organic solvent (solvent) under a nitrogen atmosphere, and allowed to react at a reaction temperature of 20 to 80°C for about 1 to 20 hours.

Examples of the organic solvent include those which are inactive to isocyanate groups and are highly hydrophilic, for example, acetone, methyl ethyl ketone, ethyl acetate, tetrahydrofuran, acetonitrile, and the like.

In the above-described polymerization, as necessary, for example, amine-based, tin-based, or lead-based reaction catalysts can be added.

When, for example, an anionic group is contained, it is preferred that a neutralizing agent be added to neutralize to form a salt of the anionic group.

Examples of the neutralizing agent include a commonly used base, for example, organic bases (e.g., tertiary amines (trialkylamine having 1 to 4 carbon atoms such as trimethylamine or triethylamine, and alkanolamines such as dimethylethanolamine, methyldiethanolamine, triethanolamine, and triisopropanolamine)), inorganic bases (ammonia, alkali metal hydroxide (lithium hydroxide, sodium hydroxide, potassium hydroxide, etc.), alkaline earth metal hydroxides (magnesium hydroxide, calcium hydroxide, etc.), and alkali metal carbonates (sodium carbonate, potassium carbonate, etc.)). These bases can be used singly or in combination of two or more.

The neutralizing agent is added at a rate of, per 1 equivalent of anionic group, 0.4 equivalent or more, preferably 0.6 equivalent or more, and for example, 1.2 equivalent or less, and preferably 1 equivalent or less.

The thus produced isocyanate group-terminated prepolymer is a polyurethane prepolymer having two or more free isocyanate groups at its molecular terminal, and the isocyanate group content (the isocyanate group content in terms of the solid content excluding the solvent) is, for example, 1.0% by mass or more and 10% by mass or less.

Next, in this method, the isocyanate group-terminated prepolymer produced as described above is allowed to react with a chain extender, for example, in water, thereby producing a polyurethane resin (D)-containing dispersion.

The chain extender contains, as an essential component, an alkoxysilyl compound having an amino group.

Examples of the alkoxysilyl compound having an amino group include
N-6(aminoethyl)y-aminopropyltrimethoxysilane (also called:
N-2-(aminoethyl)-3-aminopropyltrimethoxysilane),
N-β(aminoethyl)y-aminopropyltriethoxysilane (also called:
N-2-(aminoethyl)-3-aminopropyltriethoxysilane),
N-β(aminoethyl)y-aminopropylmethyldimethoxysilane (also called:
N-2-(aminoethyl)-3-aminopropylmethyldimethoxysilane),
N-β(aminoethyl)y-aminopropylmethyldiethoxysilane (also called:
N-2-(aminoethyl)-3-aminopropylmethyldiethoxysilane), and the like.

These alkoxysilyl compounds having an amino group may be used singly or in combination of two or more.

The chain extender can contain, to the extent that does not damage the excellent effects of the present invention, as an optional component, other polyamines (polyamine excluding the alkoxysilyl compound having an amino group).

Examples of the other polyamines include 4,4'-diphenylmethanediamine, 1,3- or 1,4-xylylenediamine or mixtures thereof, 3-aminomethyl-3,5,5-trimethylcyclohexylamine (also called: isophoronediamine), 4,4'-dicyclohexylmethanediamine, 1,3- and 1,4-bis(aminomethyl)cyclohexane and mixtures thereof, ethylenediamine, 1,6-hexamethylenediamine, hydrazine (including hydrate), 2-((2-aminoethyl)amino)ethanol (also called: N-(2-aminoethyl)ethanolamine), 2-((2-aminoethyl)amino)-1-methylpropanol (also called: N-(2-aminoethyl)isopropanolamine), and the like.

These other polyamines may be used singly or in combination of two or more. For the other polyamines, preferably, amino alcohol is used.

The chain extender is preferably composed of an alkoxysilyl compound having an amino group, and amino alcohol.

The blending amount of the alkoxysilyl compound having an amino group is in the range of 700 to 1700 mg, more preferably 900 to 1500 mg, and further preferably 1100 to 1300 mg as a Si content relative to 1 kg of a resin solid content.

To allow the isocyanate group-terminated prepolymer to react with the chain extender in water, for example, first, the isocyanate group-terminated prepolymer is added to water to disperse the isocyanate group-terminated prepolymer in water, and then the chain extender is added thereto, thereby extending the chains of the isocyanate group-terminated prepolymer with the chain extender.

To disperse the isocyanate group-terminated prepolymer in water, the isocyanate group-terminated prepolymer is added to water under stirring at a ratio of 100 to 1000 parts by mass of water relative to 100 parts by mass of the isocyanate group-terminated prepolymer.

Thereafter, the chain extender is added dropwise to the water in which the isocyanate group-terminated prepolymer is dispersed while stirring so that the equivalent ratio (active hydrogen group/isocyanate group) of the active hydrogen group (amino group and hydroxyl group) of the chain extender relative to the isocyanate group of the isocyanate group-terminated prepolymer becomes, for example, 0.6 to 1.2.

The chain extender is allowed to react by adding dropwise, and after the dropwise addition, the reaction is completed while further mixing, for example, at normal temperature. The reaction time until the completion of reaction is, for example, 0.1 hour or more, and for example, 10 hours or less.

In this method, as necessary, the organic solvent and water can be removed, and furthermore, water can be added to adjust the solid content concentration.

The produced polyurethane resin (D)-containing dispersion has a solid content concentration of, for example, 10% by mass or more, preferably 15% by mass or more, more preferably 20% by mass or more, and for example, 60% by mass or less, preferably 50% by mass or less, more preferably 45% by mass or less.

As a method for introducing a silanol group into the protective layer, a method in which a silane coupling agent or the like is added later is also known. However, in this method, complicated workings may increase and an amount to be added may be incorrectly measured. On the other hand, when a silanol group is contained in the polyurethane dispersion skeleton in advance, there is an advantage that the above-mentioned complicated workings and incorrect measurement can be avoided.

When the amount of the silanol group contained in the polyurethane resin (D) is less than 700 mg per kg of a resin constituting the polyurethane resin (D) as a Si element amount contained in the silanol group, a cross-linking structure may be insufficiently formed, and the resin itself may deteriorate when a retort treatment is applied, leading to deterioration of adhesiveness and gas barrier properties after retort treatment.

When the amount of the silanol group exceeds 1700 mg per kg of a resin constituting the polyurethane resin (D) as a Si element amount contained in the silanol group, a cross-linking structure excessively increases, so that the flexibility of the protective layer may be impaired, and the deterioration of the metal oxide layer and reduction in bending resistance may occur during the retort treatment. In addition, since the amount of unreacted silanol groups increases, the water resistance of the protective layer weakens, and hence the resin itself may deteriorate when a retort treatment is applied.

In the case where a protective layer is formed from the resin composition for a protective layer, a coating liquid (application liquid) composed of the above-mentioned polyurethane resin, ion exchanged water, and a water-soluble organic solvent can be prepared, applied and dried. As the water-soluble organic solvent, solvents selected from alcohols such as ethanol or isopropyl alcohol (IPA), ketones such as acetone or methyl ethyl ketone, and the like can be used singly or in combination of two or more. From the viewpoint of coating film processing and odors, IPA is preferably used.

A coating method of the resin composition for a protective layer is not particularly limited as long as it is a method of coating a film surface to form a layer. For example, ordinary coating methods including a gravure coating method, a reverse-roll coating method, a wire bar coating method, die coating and the like can be adopted.

Although the coating amount of the resin composition for a protective layer is not particularly limited, it is preferably in the range of 0.05 to 1.0 g/m² in a dry state, and from the viewpoint of practicality, more preferably in the range of 0.10 to 0.50 g/m². If it is less than 0.05 g/m², it may become difficult to attain sufficient adhesiveness, gas barrier properties, and protection effect, and if it is equal to or more than 1.0 g/m², it tends to be disadvantageous in terms of cost.

When the protective layer is formed, it is preferred that after coating with the resin composition for a protective layer, heating and drying be performed. The drying temperature is preferably 110 to 200°C, more preferably 130 to 200°C, and further preferably 170 to 200°C. If the drying temperature is lower than 100°C, drying of the protective layer might be insufficient, or cross-linking of the protective layer might not proceed, whereby adhesiveness in normal state and the water resistance of the protective layer when subjected to a retort treatment might decrease. On the other hand, if the drying temperature exceeds 200°C, the film may be overheated and hence may become brittle or shrink, resulting in poor processability. Besides drying, an additional heat treatment (for example, at 150 to 200°C) is effective in advancing the cross-linking of the protective layer.

### [Other layers]

The laminate film of the present invention may be provided with various kinds of layers included in a known laminate film having gas barrier properties, as necessary, in addition to the above-mentioned substrate film, coating layer, metal oxide layer and protective layer.

For example, when the laminate film of the present invention is used as a packaging material, it is preferable to include a heat sealable resin layer called a sealant. The heat sealable resin layer is usually provided on the metal oxide layer side, but may be provided on an outer surface of the substrate film (on a surface opposite to a surface on which the coating layer is formed). The formation of the heat sealable resin layer may be usually carried out by an extrusion lamination method or a dry lamination method. A thermoplastic polymer for forming the heat sealable resin layer may be any polymer which can sufficiently achieve sealant adhesion properties, and polyethylene resins such as HDPE, LDPE and LLDPE, polypropylene resins, ethylene-vinyl acetate copolymers, ethylene-α-olefin random copolymers, ionomer resins, and the like can be used.

In addition, in the laminate film of the present invention, at least one layer of a printing layer and other plastic substrates and/or paper substrates may be laminated between the metal oxide layer or the substrate film and the heat sealable resin layer, or on the outside thereof.

As a printing ink for forming the printing layer, an aqueous resin- or a solvent-based resin-containing printing ink can be preferably used. Examples of the resin to be used for the printing ink include acrylic resins, urethane-based resins, polyester-based resins, vinyl chloride-based resins, vinyl acetate copolymer resins, and their mixtures. The printing ink may contain known additives such as an antistatic agent, a light-blocking agent, an ultraviolet absorber, a plasticizer, a lubricant, a filler, a colorant, a stabilizer, a lubricating agent, a defoaming agent, a cross-linking agent, an anti-blocking agent and an antioxidant. A printing method for forming the printing layer is not particularly limited, and known printing methods such as an offset printing method, a gravure printing method and a screen printing method may be employed. In order to dry the solvent after printing, known drying methods such as hot air drying, hot roll drying and infrared drying may be employed.

Examples of the other plastic substrates and paper substrates to be preferably used include paper, polyester resins, polyamide resins, biodegradable resins, and the like from the viewpoint of providing a laminated body with sufficient rigidity and strength. A stretched film such as a biaxially stretched polyester film or a biaxially stretched nylon film is preferable for making a film excellent in mechanical strength.

In particular, when the laminate film of the present invention is used as a packaging material, it is preferred that a nylon film be interposed between the metal oxide layer and the heat sealable resin layer in order to improve mechanical properties such as pinhole property and piercing strength. As types of nylons used in this case, nylon 6, nylon 66, metaxyleneadipamide and the like are usually given. The thickness of the nylon film is usually 10 to 30 µm, and preferably 15 to 25 µm. If the thickness of the nylon film is less than 10 µm, the strength may be insufficient. On the other hand, if the thickness of the nylon film exceeds 30 µm, the nylon film has increased stiffness and may not be suitable for processing. As the nylon film, a biaxially stretched film having a stretch ratio in each of longitudinal and transverse directions of usually 2 times or more is preferably used, and the stretch ratio is more preferable about 2.5 to 4 times.

The laminate film of the present invention as described above has excellent gas barrier properties after retort treatment, increased interlayer adhesiveness, and excellent lamination strength. In addition, even when the laminate film of the present invention is subjected to a printing processing, the metal oxide layer is not damaged, and hence gas barrier properties and print quality such as design quality can be attained at the same time.

The present application claims for benefit of priority based on Japanese Patent Application No. 2015-033746 filed on February 24, 2015. The entirety of the specification of Japanese Patent Application No. 2015-033746 filed on February 24, 2015 is incorporated herein for reference.

### EXAMPLES

Next, the present invention will be described in more detail with reference to examples and comparative examples, but the present invention should not be limited to these examples. Unless specified otherwise, the term "%" means "% by mass" and the term "part(s)" means "part(s) by mass."

Evaluation methods employed in the present invention are as follows.

### <Production of laminate A for evaluation>

In a laminate obtained in each of the examples and the comparative examples, printing was carried out on a metal oxide layer using FINE STAR (registered trademark) R641AT white (manufactured by Toyo Ink Co., Ltd.) as an ink by a gravure printing machine. A nylon film ("N1100" manufactured by Toyobo Co., Ltd.) having a thickness of 15 µm was laminated on the obtained printing layer using a urethane-based two-component curable adhesive (obtained by blending "TAKELAC (registered trademark) A525S" and "TAKENATE (registered trademark) A50" manufactured by Mitsui Chemicals Inc. at 13.5:1 (mass ratio)) by a dry lamination method. Then, an unstretched polypropylene film ("P1147" manufactured by Toyobo Co., Ltd.) having a thickness of 70 µm was laminated on the nylon film using the same urethane-based two-component curable adhesive as mentioned above by a dry lamination method and aged at 40°C for 4 days to obtain a gas barrier laminate for evaluation (hereinafter, may be referred to as "laminate A"). Each of adhesive layers formed by the urethane-based two-component curable adhesive had a thickness after drying of about 4 µm.

### <Method for evaluation of oxygen permeability>

According to an electrolytic sensor method in JIS-K7126-2 (Annex A), each laminate A produced as above was subjected to oxygen permeability measurement in normal state under an atmosphere of a temperature of 23°C and a humidity of 65% RH by using an oxygen permeability measurement apparatus ("OX-TRAN 2/20", manufactured by MOCON, Inc.). The oxygen permeability measurement was carried out in the direction in which oxygen permeated to the heat sealable resin layer side from the substrate film side of the laminate.

On the other hand, each laminate A produced as above was subjected to a retort treatment for holding it in pressurized hot water of a temperature of 130°C for 30 minutes and then dried at 40°C for 24 hours. As for the laminate obtained after retort treatment, oxygen permeability (after retort treatment) was measured in the same manner as above.

### <Method for evaluation of lamination strength>

Each laminate A produced as above was cut into a size of 15 mm in width and 200 mm in length to obtain a test piece, and the lamination strength (in normal state) of the test piece was measured in conditions of a temperature of 23°C and a relative humidity of 65% by using a Tensilon universal material testing machine ("TENSILON UMT-II-500 model" manufactured by Toyo Baldwin Corporation). Note that the lamination strength was measured at the time of peeling the layers at a peeling angle of 90 degrees with a tensile speed adjusted to 200 mm/minute and with water applied to between the metal oxide layer (laminate film layer) and the nylon film layer of each of the laminate films obtained in the examples and the comparative examples.

On the other hand, the laminate A produced as above was subjected to a retort treatment for holding it in pressurized hot water of a temperature of 130°C for 30 minutes, and immediately thereafter, the laminate obtained after retort treatment was cut out in the same manner as above to obtain a test piece. The lamination strength (after retort treatment) of the test piece was measured in the same manner as above.

### <Preparation of each material used for forming a coating layer>

### (Oxazoline group-containing resin (A-1))

As an emulsion containing an oxazoline group-containing resin (A-1), EPOCROS (registered trademark) WS 300 manufactured by Nippon Shokubai Co., Ltd., which is a commercially available 10% by mass emulsion of oxazoline group-containing acrylate, was prepared. The amount of the oxazoline group in the resin was 7.7 mmol/g, and the number average molecular weight measured by GPC was 40000.

### (Polyurethane resin (B-1))

A four-necked flask equipped with a stirrer, a Dimroth condenser, a nitrogen inlet tube, a silica gel drying tube, and a thermometer was charged with 138.99 parts by mass of meta-xylylene diisocyanate, 24.22 parts by mass of 4,4'-methylenebis(cyclohexyl isocyanate), 27.16 parts by mass of ethylene glycol, 20.92 parts by mass of dimethylolpropionic acid, and 138.98 parts by mass of acetone as a solvent, the ingredients were stirred under a nitrogen atmosphere at 55°C, and it was confirmed that the reaction solution reached a predetermined amine equivalent. After lowering the temperature of this reaction solution to 35°C, 15.46 parts by mass of triethylamine was added to the reaction solution to obtain a polyurethane prepolymer solution. Next, 841.20 parts by mass of water was added to a reaction vessel equipped with a homodisper capable of high-speed stirring, the temperature of the water was adjusted to 15°C, the polyurethane prepolymer solution was then added thereto while stirring and mixing at 2000 min⁻¹ to allow the polyurethane prepolymer solution to be dispersed in water, and an aqueous amine solution obtained by mixing 23.24 parts by mass of 2-[(2-aminoethyl)amino]ethanol and 92.97 parts by mass of water was added thereto to cause a chain-extending reaction. Thereafter, acetone and a part of water were removed under reduced pressure to prepare a polyurethane resin (B-1)-containing dispersion containing a solid content of 25% by mass and having an average particle size of 70 nm. The resulting polyurethane resin (B-1) had an acid value (based on formulation) of 35 mg KOH/g, a content of meta-xylylene group (based on formulation) of 31% by mass.

### (Polyurethane resin (B-2))

A four-necked flask equipped with a stirrer, a Dimroth condenser, a nitrogen inlet tube, a silica gel drying tube, and a thermometer was charged with 136.17 parts by mass of meta-xylylene diisocyanate, 23.73 parts by mass of 4,4'-methylenebis(cyclohexyl isocyanate), 23.78 parts by mass of ethylene glycol, 23.91 parts by mass of dimethylolpropionic acid, and 126.71 parts by mass of acetone as a solvent, the ingredients were stirred under a nitrogen atmosphere at 55°C, and it was confirmed that the reaction solution reached a predetermined amine equivalent. After lowering the temperature of this reaction solution to 35°C, 17.67 parts by mass of triethylamine was added to the reaction solution to obtain a polyurethane prepolymer solution. Next, 809.55 parts by mass of water was added to a reaction vessel equipped with a homodisper capable of high-speed stirring, the temperature of the water was adjusted to 15°C, the polyurethane prepolymer solution was then added thereto while stirring and mixing at 2000 min⁻¹ to allow the polyurethane prepolymer solution to be dispersed in water, and an aqueous amine solution obtained by mixing 24.73 parts by mass of 2-[(2-aminoethyl)amino]ethanol and 98.94 parts by mass of water was added thereto to cause a chain-extending reaction. Thereafter, acetone and a part of water were removed under reduced pressure to prepare a polyurethane resin (B-2)-containing dispersion containing a solid content of 25% by mass and having an average particle size of 120 nm. The resulting polyurethane resin (B-2) had an acid value (based on formulation) of 40 mg KOH/g, a content of meta-xylylene group (based on formulation) of 30% by mass.

### (Polyurethane resin (B-3))

A four-necked flask equipped with a stirrer, a Dimroth condenser, a nitrogen inlet tube, a silica gel drying tube, and a thermometer was charged with 141.91 parts by mass of meta-xylylene diisocyanate, 24.73 parts by mass of 4,4'-methylenebis(cyclohexyl isocyanate), 28.37 parts by mass of ethylene glycol, 2.15 parts by mass of trimethylolpropane, 16.73 parts by mass of dimethylolpropionic acid, and 121.84 parts by mass of methyl ethyl ketone as a solvent, the ingredients were stirred under a nitrogen atmosphere at 70°C, and it was confirmed that the reaction solution reached a predetermined amine equivalent. After lowering the temperature of this reaction solution to 35°C, 12.37 parts by mass of triethylamine was added to the reaction solution to obtain a polyurethane prepolymer solution. Next, 800.65 parts by mass of water was added to a reaction vessel equipped with a homodisper capable of high-speed stirring, the temperature of the water was adjusted to 15°C, the polyurethane prepolymer solution was then added thereto while stirring and mixing at 2000 min⁻¹ to allow the polyurethane prepolymer solution to be dispersed in water, and an aqueous amine solution obtained by mixing 23.73 parts by mass of 2-[(2-aminoethyl)amino]ethanol and 94.92 parts by mass of water was added thereto to cause a chain-extending reaction. Thereafter, methyl ethyl ketone and a part of water were removed under reduced pressure to prepare a polyurethane resin (B-3)-containing dispersion containing a solid content of 25% by mass and having an average particle size of 70 nm. The resulting polyurethane resin (B-3) had an acid value (based on formulation) of 28 mg KOH/g, a content of meta-xylylene group (based on formulation) of 31% by mass.

### (Polyurethane resin (B-4))

A four-necked flask equipped with a stirrer, a Dimroth condenser, a nitrogen inlet tube, a silica gel drying tube, and a thermometer was charged with 111.92 parts by mass of meta-xylylene diisocyanate, 19.50 parts by mass of 4,4'-methylenebis(cyclohexyl isocyanate), 11.25 parts by mass of ethylene glycol, 2.03 parts by mass of trimethylolpropane, 54.36 parts by mass of polypropylene glycol having a number average molecular weight of 400, 18.53 parts by mass of dimethylolpropionic acid, and 113.92 parts by mass of methyl ethyl ketone as a solvent, the ingredients were stirred under a nitrogen atmosphere at 70°C, and it was confirmed that the reaction solution reached a predetermined amine equivalent. After lowering the temperature of this reaction solution to 35°C, 13.70 parts by mass of triethylamine was added to the reaction solution to obtain a polyurethane prepolymer solution. Next, 793.96 parts by mass of water was added to a reaction vessel equipped with a homodisper capable of high-speed stirring, the temperature of the water was adjusted to 15°C, the polyurethane prepolymer solution was then added thereto while stirring and mixing at 2000 min⁻¹ to allow the polyurethane prepolymer solution to be dispersed in water, and an aqueous amine solution obtained by mixing 18.72 parts by mass of 2-[(2-aminoethyl)amino]ethanol and 74.86 parts by mass of water was added thereto to cause a chain-extending reaction. Thereafter, methyl ethyl ketone and a part of water were removed under reduced pressure to prepare a polyurethane resin (B-4)-containing dispersion containing a solid content of 25% by mass and having an average particle size of 50 nm. The resulting polyurethane resin (B-4) had an acid value (based on formulation) of 31 mg KOH/g, a content of meta-xylylene group (based on formulation) of 25% by mass.

### (Polyurethane resin (B-5))

As a polyurethane resin (B-5)-containing dispersion, TAKELAC (registered trademark) W605 manufactured by Mitsui Chemicals Inc., which is a commercially available 30% by mass dispersion of polyester urethane resin, was prepared. The polyurethane resin (B-5) had an acid value (based on formulation) of 25 mg KOH/g and a content of meta-xylylene group (based on formulation) of 0% by mass.

### (Resin (C-1) having an acid value of 30 mg KOH/g or more)

As an emulsion containing a resin (C) having an acid value of 30 mg KOH/g or more, PLAS COAT (registered trademark) Z-730 manufactured by Goo Chemical Co.,Ltd., which is a commercially available 25% by mass emulsion of polyester resin, was prepared. This resin had an acid value of 50 mg KOH/g.

### (Acrylic resin (E-1))

As an acrylic resin (E)-containing emulsion, MOVINYL (registered trademark) 7980 manufactured by Nippon Synthetic Chemical Industry Co., Ltd., which is a commercially available emulsion of acrylic ester copolymer, was prepared. This resin had an acid value of 4 mg KOH/g. The content of alkyl (meth)acrylate in the resin was 40 mol% or more.

### <Preparation of each material used for forming a protective layer>

### (Polymerization of polyurethane resin (D-1))

A four-necked flask equipped with a stirrer, a Dimroth condenser, a nitrogen inlet tube, a silica gel drying tube, and a thermometer was charged with 143.95 parts by mass of meta-xylylene diisocyanate, 25.09 parts by mass of 4,4'-methylenebis(cyclohexyl isocyanate), 28.61 parts by mass of ethylene glycol, 5.50 parts by mass of trimethylolpropane, 12.37 parts by mass of dimethylolpropionic acid, and 120.97 parts by mass of methyl ethyl ketone as a solvent, the ingredients were stirred under a nitrogen atmosphere at 70°C, and it was confirmed that the reaction solution reached a predetermined amine equivalent. After lowering the temperature of this reaction solution to 35°C, 9.14 parts by mass of triethylamine was added to the reaction solution to obtain a polyurethane prepolymer solution. Next, 794.97 parts by mass of water was added to a reaction vessel equipped with a homodisper capable of high-speed stirring, the temperature of the water was adjusted to 15°C, the polyurethane prepolymer solution was then added thereto while stirring and mixing at 2000 min⁻¹ to allow the polyurethane prepolymer solution to be dispersed in water, an aqueous amine solution obtained by mixing 22.96 parts by mass of 2-[(2-aminoethyl)amino]ethanol and 91.84 parts by mass of water was added thereto, and then, an aqueous amine solution obtained by mixing 2.38 parts by mass of N-2-(aminoethyl)-3-aminopropyltrimethoxysilane (trade name: KBM-603, manufactured by Shin-Etsu Chemical Co., Ltd.) and 9.50 parts by mass of water was added thereto to cause a chain-extending reaction. Thereafter, methyl ethyl ketone and a part of water were removed under reduced pressure to prepare a polyurethane resin (D-1)-containing dispersion containing a solid content of 25% by mass and having an average particle size of 70 nm. The resulting polyurethane resin (D-1) had a Si content (based on formulation) of 1200 mg/kg and a content of meta-xylylene group (based on formulation) of 32% by mass.

### (Polymerization of polyurethane resin (D-2))

A four-necked flask equipped with a stirrer, a Dimroth condenser, a nitrogen inlet tube, a silica gel drying tube, and a thermometer was charged with 144.69 parts by mass of meta-xylylene diisocyanate, 25.21 parts by mass of 4,4'-methylenebis(cyclohexyl isocyanate), 28.76 parts by mass of ethylene glycol, 5.53 parts by mass of trimethylolpropane, 12.43 parts by mass of dimethylolpropionic acid, and 121.59 parts by mass of methyl ethyl ketone as a solvent, the ingredients were stirred under a nitrogen atmosphere at 70°C, and it was confirmed that the reaction solution reached a predetermined amine equivalent. After lowering the temperature of this reaction solution to 35°C, 9.19 parts by mass of triethylamine was added to the reaction solution to obtain a polyurethane prepolymer solution. Next, 799.00 parts by mass of water was added to a reaction vessel equipped with a homodisper capable of high-speed stirring, the temperature of the water was adjusted to 15°C, the polyurethane prepolymer solution was then added thereto while stirring and mixing at 2000 min⁻¹ to allow the polyurethane prepolymer solution to be dispersed in water, and an aqueous amine solution obtained by mixing 24.19 parts by mass of 2-[(2-aminoethyl)amino]ethanol and 96.78 parts by mass of water was added thereto to cause a chain-extending reaction. Thereafter, methyl ethyl ketone and a part of water were removed under reduced pressure to prepare a polyurethane resin (D-2)-containing dispersion containing a solid content of 25% by mass and having an average particle size of 70 nm. The resulting polyurethane resin (D-2) had a Si content (based on formulation) of 0 mg/kg and a content of meta-xylylene group (based on formulation) of 32% by mass.

### (Polymerization of polyurethane resin (D-3))

A four-necked flask equipped with a stirrer, a Dimroth condenser, a nitrogen inlet tube, a silica gel drying tube and, a thermometer was charged with 55.12 parts by mass of 1,3-bis(isocyanatemethyl)cyclohexane, 6.11 parts by mass of triethylene glycol, 162.75 parts by mass of polytetramethylene ether glycol having a number average molecular weight of 2000, 8.19 parts by mass of dimethylolpropionic acid, and 102.15 parts by mass of methyl ethyl ketone as a solvent, the ingredients were stirred under a nitrogen atmosphere at 70°C, and it was confirmed that the reaction solution reached a predetermined amine equivalent. After lowering the temperature of this reaction solution to 35°C, 6.18 parts by mass of triethylamine was added to the reaction solution to obtain a polyurethane prepolymer solution. Next, 783.15 parts by mass of water was added to a reaction vessel equipped with a homodisper capable of high-speed stirring, the temperature of the water was adjusted to 15°C, the polyurethane prepolymer solution was then added thereto while stirring and mixing at 2000 min⁻¹ to allow the polyurethane prepolymer solution to be dispersed in water, an aqueous amine solution obtained by mixing 7.49 parts by mass of 2-[(2-aminoethyl)amino]ethanol and 29.97 parts by mass of water was added thereto, and then, an aqueous amine solution obtained by mixing 4.16 parts by mass of N-2-(aminoethyl)-3-aminopropyltrimethoxysilane (trade name: KBM-603, manufactured by Shin-Etsu Chemical Co., Ltd.) and 16.63 parts by mass of water was added thereto to cause a chain-extending reaction. Thereafter, methyl ethyl ketone and a part of water were removed under reduced pressure to prepare a polyurethane resin (D-3)-containing dispersion containing a solid content of 25% by mass and having an average particle size of 60 nm. The resulting polyurethane resin (D-3) had a Si content (based on formulation) of 2100 mg/kg and a content of meta-xylylene group (based on formulation) of 0% by mass.

### (Polymerization of polyurethane resin (D-4))

A four-necked flask equipped with a stirrer, a Dimroth condenser, a nitrogen inlet tube, a silica gel drying tube, and a thermometer was charged with 112.93 parts by mass of meta-xylylene diisocyanate, 58.81 parts by mass of 4,4'-methylenebis(cyclohexyl isocyanate), 27.19 parts by mass of ethylene glycol, 5.22 parts by mass of trimethylolpropane, 12.38 parts by mass of dimethylolpropionic acid, and 121.52 parts by mass of methyl ethyl ketone as a solvent, the ingredients were stirred under a nitrogen atmosphere at 70°C, and it was confirmed that the reaction solution reached a predetermined amine equivalent. After lowering the temperature of this reaction solution to 35°C, 9.15 parts by mass of triethylamine was added to the reaction solution to obtain a polyurethane prepolymer solution. Next, 797.80 parts by mass of water was added to a reaction vessel equipped with a homodisper capable of high-speed stirring, the temperature of the water was adjusted to 15°C, the polyurethane prepolymer solution was then added thereto while stirring and mixing at 2000 min⁻¹ to allow the polyurethane prepolymer solution to be dispersed in water, an aqueous amine solution obtained by mixing 21.94 parts by mass of 2-[(2-aminoethyl)amino]ethanol and 87.77 parts by mass of water was added thereto, and then, an aqueous amine solution obtained by mixing 2.38 parts by mass of N-2-(aminoethyl)-3-aminopropyltrimethoxysilane (trade name: KBM-603, manufactured by Shin-Etsu Chemical Co., Ltd.) and 9.50 parts by mass of water was added thereto to cause a chain-extending reaction. Thereafter, methyl ethyl ketone and a part of water were removed under reduced pressure to prepare a polyurethane resin (D-4)-containing dispersion containing a solid content of 25% by mass and having an average particle size of 60 nm. The resulting polyurethane resin (D-4) had a Si content (based on formulation) of 1200 mg/kg and a content of meta-xylylene group (based on formulation) of 25% by mass.

### (Example 1)

### (1) Preparation of a coating liquid 1 used for a coating layer

The following coating materials were mixed to prepare a coating liquid 1. The mass ratios in terms of the solid content of the polyurethane resin (B), the oxazoline group-containing resin (A) and the polyester resin (C) are as shown in Table 1.

| | |
|---|---|
| Water | 31.80% by mass |
| Isopropanol | 25.00% by mass |
| Oxazoline group-containing resin (A-1) | 24.00% by mass |
| Polyurethane resin (B-1) | 16.00% by mass |
| Polyester resin (C-1) | 3.20% by mass |

### (2) Preparation of a coating liquid 2 used for coating a protective layer

The following coating materials were mixed to prepare a coating liquid 2. The mass ratios in terms of the solid content of the polyurethane resin (D) are as shown in Table 1.

| | |
|---|---|
| Water | 46.00% by mass |
| Isopropanol | 30.00% by mass |
| Polyurethane resin (D-1) | 24.00% by mass |

### (3) Production of a polyester substrate film and coating with the coating liquid 1 (lamination of a coating layer)

Polyethylene terephthalate resin having an intrinsic viscosity of 0.62 dl/g (30°C, phenol/tetrachloroethane = 60/40) was subjected to preliminary crystallization, then subjected to main drying, extruded at 280°C using an extruder having a T-die, and rapidly cooled and solidified on a drum of a surface temperature of 40°C to obtain an amorphous sheet. Next, the obtained sheet was subjected to stretching of 4.0 times at 100°C in the longitudinal direction between a heating roll and a cooling roll. Then, the coating liquid 1 was applied to one surface of the resulting uniaxially stretched film by a fountain bar coating method. The uniaxially stretched film was introduced to a tenter while being dried, preheated at 100°C, subjected to stretching of 4.0 times in the transverse direction at 120°C, and subjected to a heating treatment at 225°C while carrying out 6% relaxation in the transverse direction to obtain a laminate film having a coating layer of 0.100 g/m² formed on the biaxial stretched polyester film having a thickness of 12 µm.

### (4) Formation of a metal oxide layer

On a surface on which the coating layer was formed of the film obtained in the above (3), a composite oxide layer composed of silicon oxide and aluminum oxide was formed as a metal oxide layer by an electron beam vapor deposition method. As a vapor deposition source, particulate SiO₂ (purity: 99.9%) and particulate Al₂O₃ (purity: 99.9%) each having a size of about 3 mm to 5 mm were used. The compositional formulation of the composite oxide layer was SiO₂/Al₂O₃ (mass ratio) = 60/40. In the film thus produced (i.e., film containing metal oxide layer / coating layer), the thickness of the metal oxide layer (SiO₂/Al₂O₃ composite oxide layer) was 13 nm. In this manner, a vapor deposited film having the coating layer and the metal oxide layer was obtained.

### (5) Coating of the vapor deposited film with the coating liquid 2 (lamination of a protective layer)

The coating liquid 2 was applied onto the metal oxide layer of the vapor deposited film obtained in the above (4) by a gravure roll coating method and dried at 180°C to obtain a protective layer. The coating amount after drying was 0.350 g/m² (Dry).

In this manner, a laminate film having the coating layer / the metal oxide layer / the protective layer on the substrate film was prepared. As for the resulting laminate film, oxygen permeability and lamination strength were evaluated as described above. The results are shown in Table 2.

### (Examples 2 to 10, Comparative Examples 1 to 3)

Laminate films were produced in the same manner as in Example 1, except that in the preparation of coating liquids for forming a coating layer, the types of the oxazoline group-containing resin (A), the polyurethane resin (B), the aqueous polyester resin (C) and the acrylic resin (E) were changed as shown in Table 1, and the respective materials were changed such that the mass ratios in terms of the solid content became the mass ratios shown in Table 1 (the ratio of isopropanol to the total amount of the coating liquid was set to 25.00% by mass as in Example 1), and in the preparation of coating liquids for forming a protective layer, the type of the polyurethane resin (D) was changed as shown in Table 1. The oxygen permeability and the lamination strength of the thus produced laminate films were evaluated. The results are shown in Table 2.

**Table. 1**

| | Coating layer | | | | | | Protective layer | | | |
|---|---|---|---|---|---|---|---|---|---|---|
| | Oxazoline group-containing resin | Polyurethane resin | Polyester resin | Acrylic resin | A/B/C/E [mass ratio] | Coating amount [g/m²] | Polyurethane (D) | | | |
| | | | | | | | | [mass ratio] | Si mg/1kg | Metaxylylene group % by mass |
| Example 1 | (A-1) | (B-1) | (C-1) | - | 30/60/10/0 | 0.1 | (D-1) | [100] | 1200 | 32 |
| Example 2 | (A-1) | (B-1) | - | - | 50/50/0/0 | 0.1 | (D-1) | [100] | 1200 | 32 |
| Example 3 | (A-1) | (B-1) | (C-1) | - | 40/50/10/0 | 0.1 | (D-1) | [100] | 1200 | 32 |
| Example 4 | (A-1) | (B-1) | (C-1) | - | 50/40/10/0 | 0.1 | (D-1) | [100] | 1200 | 32 |
| Example 5 | (A-1) | (B-2) | (C-1) | - | 30/60/10/0 | 0.1 | (D-1) | [100] | 1200 | 32 |
| Example 6 | (A-1) | (B-1) | (C-1) | - | 50/30/20/0 | 0.1 | (D-1) | [100] | 1200 | 32 |
| Example 7 | (A-1) | (B-5) | - | (E-1) | 50/20/0/30 | 0.025 | (D-1) | [100] | 1200 | 32 |
| Example 8 | (A-1) | (B-3) | (C-1) | - | 30/60/10 | 0.1 | (D-1) | [100] | 1200 | 32 |
| Example 9 | (A-1) | (B-4) | (C-1) | - | 30/60/10 | 0.1 | (D-1) | [100] | 1200 | 32 |
| Example 10 | (A-1) | (B-1) | (C-1) | - | 30/60/10 | 0.1 | (D-4) | [100] | 1200 | 25 |
| Comparative Example 1 | - | (B-1) | - | - | 0/100/0 | 0.1 | (D-1) | [100] | 1200 | 32 |
| Comparative Example 2 | (A-1) | (B-1) | (C-1) | - | 30/60/10 | 0.1 | (D-2) | [100] | 0 | 32 |
| Comparative Example 3 | (A-1) | (B-1) | (C-1) | - | 30/60/10 | 0.1 | (D-2)/(D-3) | [43/57] | 1197 | 14 |

**Table.2**

| | Evaluation item | | | |
|---|---|---|---|---|
| | Oxygen permeability [ml/m²· day· MPa] | | Lamination strength [N/15mm] | |
| | Normal state | After retort treatment | Normal state | After retort treatment |
| Example 1 | 0.9 | 1.0 | 4.0 | 3.2 |
| Example 2 | 1.0 | 1.3 | 4.2 | 3.5 |
| Example 3 | 1.0 | 1.0 | 4.1 | 3,3 |
| Example 4 | 1.1 | 1.1 | 4.4 | 3.5 |
| Example 5 | 0.8 | 0.8 | 4.2 | 3.5 |
| Example 6 | 1.2 | 1.2 | 4.0 | 3.5 |
| Example 7 | 2.5 | 2.5 | 4.0 | 3.3 |
| Example 8 | 2.2 | 3.0 | 4.0 | 3.0 |
| Example 9 | 3.0 | 4.0 | 4.0 | 3.0 |
| Example 10 | 2.5 | 2.5 | 4.0 | 3.0 |
| Comparative Example 1 | 1.0 | 50.0 | 4.0 | 0.5 |
| Comparative Example 2 | 1.0 | 2.0 | 4.0 | 1.5 |
| Comparative Example 3 | 3.0 | 5.0 | 4.0 | 1.0 |

## Claims

1. A laminate film comprising a coating layer, a metal oxide layer and a protective layer, with another intervening layer or without any intervening layer, laminated in this order on at least one surface of a polyester substrate film,
wherein the coating layer comprises an oxazoline group-containing resin (A) and a polyurethane resin (B),
wherein the content of the oxazoline group in the oxazoline group-containing resin (A) is 5.1 to 9.0 mmol/g,
wherein the acid value of the polyurethane resin (B) is 25 to 50 mg KOH/g,
wherein the polyurethane resin (B) is obtained by reacting an isocyanate group-terminated prepolymer with a chain extender,
wherein the chain extender includes 4,4'-diphenylmethanediamine, tolylenediamine, 1,3- or 1,4-xylylenediamine, or mixtures thereof, 3-aminomethyl-3,5,5-trimethylcyclohexylamine (also called: isophoronediamine), 4,4'-dicyclohexylmethanediamine, 1,3- and 1,4-bis(aminomethyl)cyclohexane, ethylenediamine, 1,6-hexamethylenediamine, hydrazine, hydrazine hydrate, or 2-((2-aminoethyl)amino)ethanol, and
wherein the isocyanate group-terminated prepolymer is obtained by reacting a polyisocyanate component with a polyol component containing a diol having 2 to 6 carbon atoms, and a carboxyl group-containing polyol,
wherein the metal oxide layer comprises a composite oxide composed of silicon oxide and aluminum oxide, and
wherein the protective layer comprises a polyurethane resin (D),
wherein the polyurethane resin (D) contains a meta-xylylene group in an amount of 20 to 33% by mass and a silanol group in an amount of 700 to 1700 mg per kg of a resin constituting the polyurethane resin (D) as a Si element amount contained in the silanol group,
wherein the polyurethane resin (D) is obtained by reacting an isocyanate group-terminated prepolymer with a chain extender containing an alkoxysilyl compound having an amino group, and
wherein the isocyanate group-terminated prepolymer is obtained by reacting a polyisocyanate component with a polyol component containing a diol having 2 to 6 carbon atoms, and a carboxyl group-containing polyol.

2. The laminate film according to claim 1, wherein the coating layer comprises a resin (C) having an acid value of 30 mg KOH/g or more.

3. The laminate film according to claim 1 or 2, wherein the coating layer comprises an acrylic resin (E) having an acid value of 10 mg KOH/g or less.

4. The laminate film according to any of claims 1 to 3, wherein in the coating layer, the polyurethane resin (B) is contained in an amount of 15 to 60% by mass, and the oxazoline group-containing resin (A) is contained in an amount of 30 to 60% by mass.

## Patentansprüche

1. Eine Verbundfolie, umfassend eine Beschichtungsschicht, eine Metalloxidschicht und eine Schutzschicht, mit einer weiteren Zwischenschicht oder ohne jegliche Zwischenschicht, laminiert in dieser Reihenfolge auf mindestens eine Oberfläche einer Polyester-Substratfolie,
wobei die Beschichtungsschicht ein eine Oxazolingruppe enthaltendes Harz (A) und ein Polyurethanharz (B) umfasst,
wobei der Gehalt der Oxazolingruppe in dem eine Oxazolingruppe enthaltenden Harz (A) 5,1 bis 9,0 mMol/g beträgt,
wobei die Säurezahl des Polyurethanharzes (B) 25 bis 50 mg KOH/g beträgt,
wobei das Polyurethanharz (B) erhalten wird durch Umsetzen eines Vorpolymers mit endständiger Isocyanatgruppe mit einem Kettenverlängerer,
wobei der Kettenverlängerer 4,4'-Diphenylmethandiamin, Tolylendiamin, 1,3- oder 1,4-Xylylendiamin oder Gemische davon, 3-Aminomethyl-3,5,5-trimethylcyclohexylamin (auch Isophorondiamin genannt), 4,4'-Dicyclohexylmethandiamin, 1,3- und 1,4-Bis(aminomethyl)cyclohexan, Ethylendiamin, 1,6-Hexamethylendiamin, Hydrazin, Hydrazinhydrat oder 2-((2-Aminoethyl)amino)ethanol umfasst und
wobei das Vorpolymer mit endständiger Isocyanatgruppe erhalten wird durch Umsetzen einer Polyisocyanat-Komponente mit einer Polyol-Komponente, die ein Diol mit 2 bis 6 Kohlenstoffatomen enthält, und einem eine Carboxylgruppe enthaltenden Polyol,
wobei die Metalloxidschicht ein Verbundoxid, zusammengesetzt aus Siliciumoxid und Aluminiumoxid, umfasst und
wobei die Schutzschicht ein Polyurethanharz (D) umfasst,
wobei das Polyurethanharz (D) eine meta-Xylylengruppe in einer Menge von 20 bis 33 Massen-% und eine Silanolgruppe in einer Menge von 700 bis 1700 mg pro kg eines Harzes, aus dem das Polyurethanharz (D) aufgebaut ist, als eine in der Silanolgruppe enthaltene Si-Element-Menge umfasst,
wobei das Polyurethanharz (D) erhalten wird durch Umsetzen eines Vorpolymers mit endständiger Isocyanatgruppe mit einem Kettenverlängerer, der eine Alkoxysilylverbindung mit einer Aminogruppe enthält, und
wobei das Vorpolymer mit endständiger Isocyanatgruppe erhalten wird durch Umsetzen einer Polyisocyanat-Komponente mit einer Polyol-Komponente, die ein Diol mit 2 bis 6 Kohlenstoffatomen enthält, und einem eine Carboxylgruppe enthaltenden Polyol.

2. Die Verbundfolie nach Anspruch 1, wobei die Beschichtungsschicht ein Harz (C) mit einer Säurezahl von 30 mg KOH/g oder mehr umfasst.

3. Die Verbundfolie nach Anspruch 1 oder 2, wobei die Beschichtungsschicht ein Acrylharz (E) mit einer Säurezahl von 10 mg KOH/g oder weniger umfasst.

4. Die Verbundfolie nach einem der Ansprüche 1 bis 3, wobei in der Beschichtungsschicht das Polyurethanharz (B) in einer Menge von 15 bis 60 Massen-% enthalten ist und das eine Oxazolingruppe enthaltende Harz (A) in einer Menge von 30 bis 60 Massen-% enthalten ist.

## Revendications

1. Film stratifié comprenant une couche de revêtement, une couche d'oxyde métallique et une couche protectrice, avec une autre couche intercalaire ou sans aucune couche intercalaire, stratifiées dans cet ordre sur au moins une surface d'un film substrat en polyester,
dans lequel la couche de revêtement comprend une résine contenant un groupe oxazoline (A) et une résine polyuréthane (B),
dans lequel la teneur en groupe oxazoline de la résine contenant un groupe oxazoline (A) est de 5,1 à 9,0 mmol/g,
dans lequel l'indice d'acide de la résine polyuréthane (B) est de 25 à 50 mg KOH/g,
dans lequel la résine polyuréthane (B) est obtenue en faisant réagir un prépolymère terminé par un groupe isocyanate avec un allongeur de chaîne,
dans lequel l'allongeur de chaîne comprend la 4,4'-diphénylméthanediamine, la tolylènediamine, la 1,3- ou 1,4-xylylènediamine, ou leurs mélanges, la 3-aminométhyl-3,5,5-triméthylcyclohexylamine (également appelée isophoronediamine), la 4,4'-dicyclohexylméthanediamine, le 1,3- et 1,4-bis(aminométhyl)cyclohexane, l'éthylènediamine, la 1,6-hexaméthylènediamine, l'hydrazine, l'hydrate d'hydrazine, ou le 2-((2-aminoéthyl)amino)éthanol, et
dans lequel le prépolymère terminé par un groupe isocyanate est obtenu en faisant réagir un composant polyisocyanate avec un composant polyol contenant un diol ayant 2 à 6 atomes de carbone, et un polyol contenant un groupe carboxyle,
dans lequel la couche d'oxyde métallique comprend un oxyde composite composé d'oxyde de silicium et d'oxyde d'aluminium, et
dans lequel la couche protectrice comprend une résine polyuréthane (D),
dans lequel la résine polyuréthane (D) contient un groupe métaxylylène en une quantité de 20 à 33 % en masse et un groupe silanol en une quantité de 700 à 1700 mg par kg d'une résine constituant la résine polyuréthane (D) en tant que quantité d'élément Si contenue dans le groupe silanol,
dans lequel la résine polyuréthane (D) est obtenue en faisant réagir un prépolymère terminé par un groupe isocyanate avec un allongeur de chaîne contenant un composé alcoxysilyle ayant un groupe amino, et
dans lequel le prépolymère terminé par un groupe isocyanate est obtenu en faisant réagir un composant polyisocyanate avec un composant polyol contenant un diol ayant 2 à 6 atomes de carbone, et un polyol contenant un groupe carboxyle.

2. Film stratifié selon la revendication 1, dans lequel la couche de revêtement comprend une résine (C) ayant un indice d'acide de 30 mg KOH/g ou plus.

3. Film stratifié selon la revendication 1 ou 2, dans lequel la couche de revêtement comprend une résine acrylique (E) ayant un indice d'acide de 10 mg KOH/g ou moins.

4. Film stratifié selon l'une quelconque des revendications 1 à 3, dans lequel, dans la couche de revêtement, la résine polyuréthane (B) est contenue en une quantité de 15 à 60 % en masse, et la résine contenant un groupe oxazoline (A) est contenue en une quantité de 30 à 60 % en masse.
